Europäisches Patentamt

European Patent Office

Office européen des brevets

(19)

(11) Veröffentlichungsnummer : **0 106 899**
**B1**

(12)                    **EUROPÄISCHE PATENTSCHRIFT**

(45) Veröffentlichungstag der Patentschrift :
30.12.86

(51) Int. Cl.⁴ : **E 04 H    5/08** , A 01 G    9/14

(21) Anmeldenummer : **82108803.6**

(22) Anmeldetag : **23.09.82**

(54) **Einschiffiges oder mehrschiffiges landwirtschaftliches Mehrzweckgebäude mit energiesparender Luftkonditionierung.**

(43) Veröffentlichungstag der Anmeldung :
02.05.84 Patentblatt 84/18

(45) Bekanntmachung des Hinweises auf die Patenterteilung : 30.12.86 Patentblatt 86/52

(84) Benannte Vertragsstaaten :
AT BE CH DE FR GB IT LI LU NL SE

(56) Entgegenhaltungen :
DE-C- 1 066 010
FR-A- 1 168 575
FR-A- 1 479 336
FR-A- 1 529 423

(73) Patentinhaber : **LICENCIA TALALMANYOKAT ERTE-KESITÖ VALLALAT**
**Bajcsy-Zsilinszky Ut, 16**
**H-1368 Budapest (HU)**

(72) Erfinder : **Gál, Pál, Dipl.-Ing.**
**Fadrusz u. 12        .**
**H-1114 Budapest (HU)**

(74) Vertreter : **Lemcke, Rupert, Dipl.-Ing. et al**
**Amalienstrasse 28 Postfach 4026**
**D-7500 Karlsruhe 1 (DE)**

EP 0 106 899 B1

**Beschreibung**

Die Erfindung betrifft ein einschiffiges oder mehrschiffiges landwirtschaftliches Mehrzweckgebäude mit energiesparender Luftkonditionierung, mit flexiblen und/oder steifen Abdeckelementen, die über Befestigungsmittel von Trägern gehalten sind, welche als kanalbildende, im Querschnitt mehrfach abgewinkelte, mit Öffnungen versehene Profile zur Führung wenigstens eines gasförmigen oder flüssigen Mediums zur Konditionierung ausgebildet sind.

Derartige Mehrzweckgebäude sind durch DE-C-1 066 010 bekannt. Hier sind jedoch bis auf die erwähnten Öffnungen die Träger als geschlossene Profile ausgebildet, wodurch keine Möglichkeit besteht, die Kanäle zu reinigen, wenn es dort durch die Führung eines flüssigen Mediums, beispielsweise Wasser zum Absetzen von Verunreinigungen und Salzen oder zu einer Algenbildung gekommen ist. Darüber hinaus besteht aus dem gleichen Grunde auch keine Möglichkeit, die Auswirkungen korrosiver Einflüsse zu überprüfen, infolge derer die Wandstärke der Profile örtlich im Laufe der Zeit eine derartige Schwächung erfahren kann, daß die Profile ihre Tragfunktion nicht mehr mit Sicherheit erfüllen können, somit die Gefahr eines Einbrechens des Gebäudes unter der Last der Abdeckelemente entsteht.

Schließlich ist im bekannten Falle die Luftkonditionierung nur über verhältnismäßig wenige und im Querschnitt kleine Öffnungen der Trägerprofile und dadurch in verhältnismäßig ungleichmäßiger Weise möglich und es bestehen aus dem gleichen Grunde kaum Variationsmöglichkeiten hinsichtlich der Verwendung einmal vorhandener Profilformen für unterschiedliche Arten der Luftkonditionierung.

Aufgabe der Erfindung ist es daher, bei einem Mehrzweckgebäude der Eingangs genannten Art die erwähnten nachteiligen Eigenschaften zu beseitigen und eine energiesparende Luftkonditionierung zu ermöglichen, bei der das Heiz- bzw. Kühlmedium in direkter Verbindung mit dem zu konditionierenden Raum bzw. unterschiedlich gestalteten Abdeckelementen steht.

Diese Aufgabe ist erfindungsgemäß dadurch gelöst, daß das Profil des Trägers mindestens einen nach oben offenen Kanal aufweist.

Zweckmäßig ist es, daß die Abdeckelemente formschlüssig, gegebenenfalls verschiebbar an den Trägern befestigt sind.

Für die Ausgestaltung eines Mehrzweckgebäudes nach der Erfindung hat es sich außerdem als vorteilhaft erwiesen, daß die unteren Enden der Träger von geneigt oder vertikal angeordneten, einen Kanal für das Medium bildenden Säulen getragen sind, wobei an den oberen Enden der Säulen eine an den Unterkanten der Abdeckelemente angeschlossene Kehlrinne angeordnet sein kann.

Schließlich kann vorgesehen sein, daß die verschiebbaren Abdeckelemente dem Abstand der Träger entsprechend an Wickeltrommeln befestigt sind, die zentral gesteuert drehantreibbar sind, womit eine stufenlose Ein- bzw. Verstellung der Luftkonditionierung möglich ist.

Die Erfindung ist nachfolgend anhand von Ausführungsbeispielen näher erläutert, die in den Zeichnungen dargestellt sind. In den Zeichnungen zeigen :

Figur 1 einen Träger mit einfacher Abdeckung ;

Figur 2 einen Träger mit doppelter Abdeckung ;

Figuren 3 und 4 Träger mit Einlage ;

Figuren 5 und 6 Träger mit doppeltem Strömungskanal ;

Figur 7 einen Träger mit Luftabdeckung

Figur 8 einen Träger mit voneinander unabhängigen Strömungskanälen ;

Figur 9 einen Träger mit Klemmband ;

Figur 10 einen mit gelenkartiger Konsole versehenen Träger ;

Figur 11 einen Träger mit Lichtabdeckung ;

Figur 12 eine teilweise Seitenansicht aus Fig. 11 ;

Figur 13 ein Ausführungsbeispiel eines Lüftungssystems, sowie der nieder- und hochziehbaren Abdeckung eines Mehrschiff-Treibhauses,

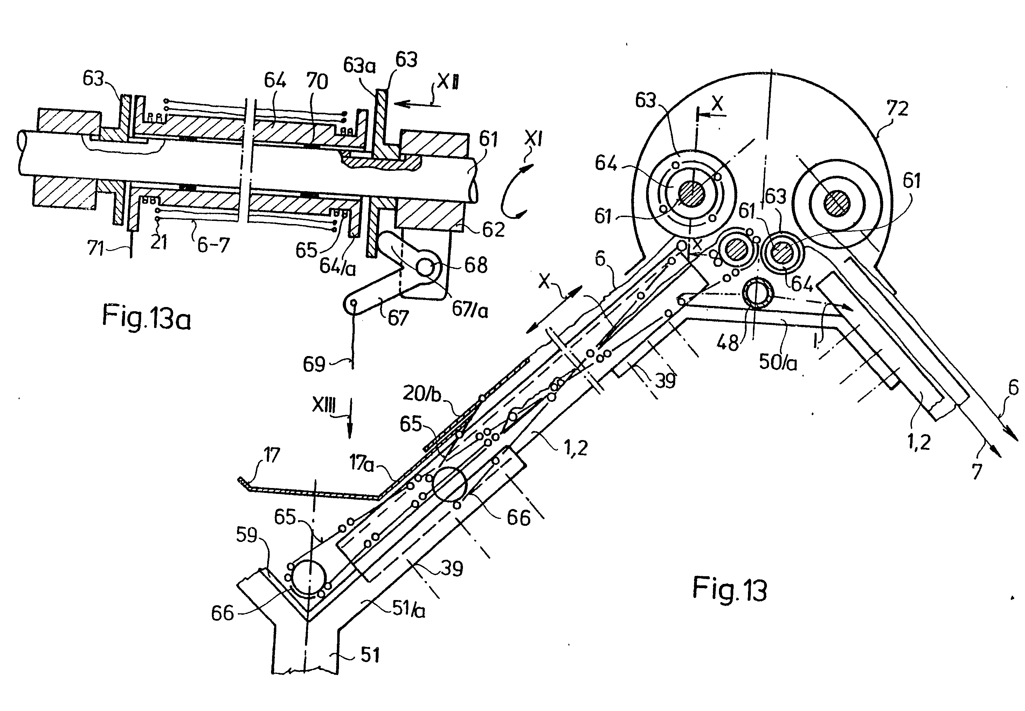

Figur 13/a die Schnittansicht X-X aus Fig. 13 in vergrößertem Maßstab ;

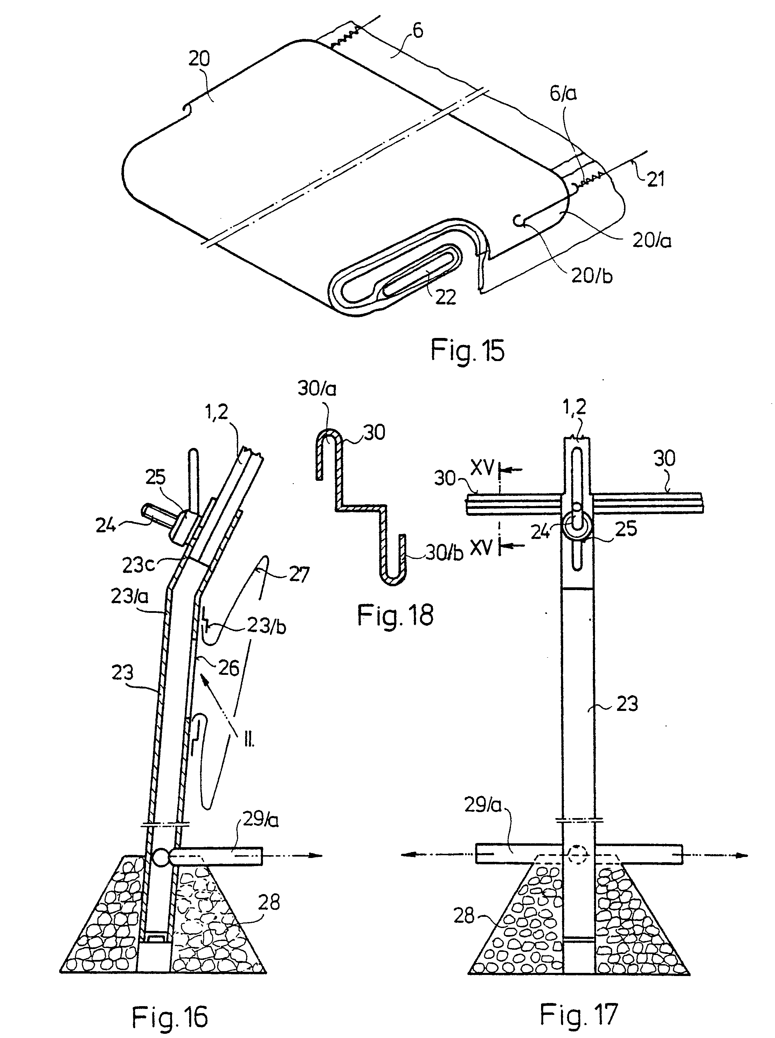

Figur 14 eine für eine Mehrschiff-Ausführung geeignete Kehlenkonstruktion ;

Figur 15 eine Deckenendbegrenzer-Platte ;

Figuren 16 und 17 eine in den Boden gestellte Säule ;

Figur 18 den Schnitt XV-XV aus Fig. 17 ;

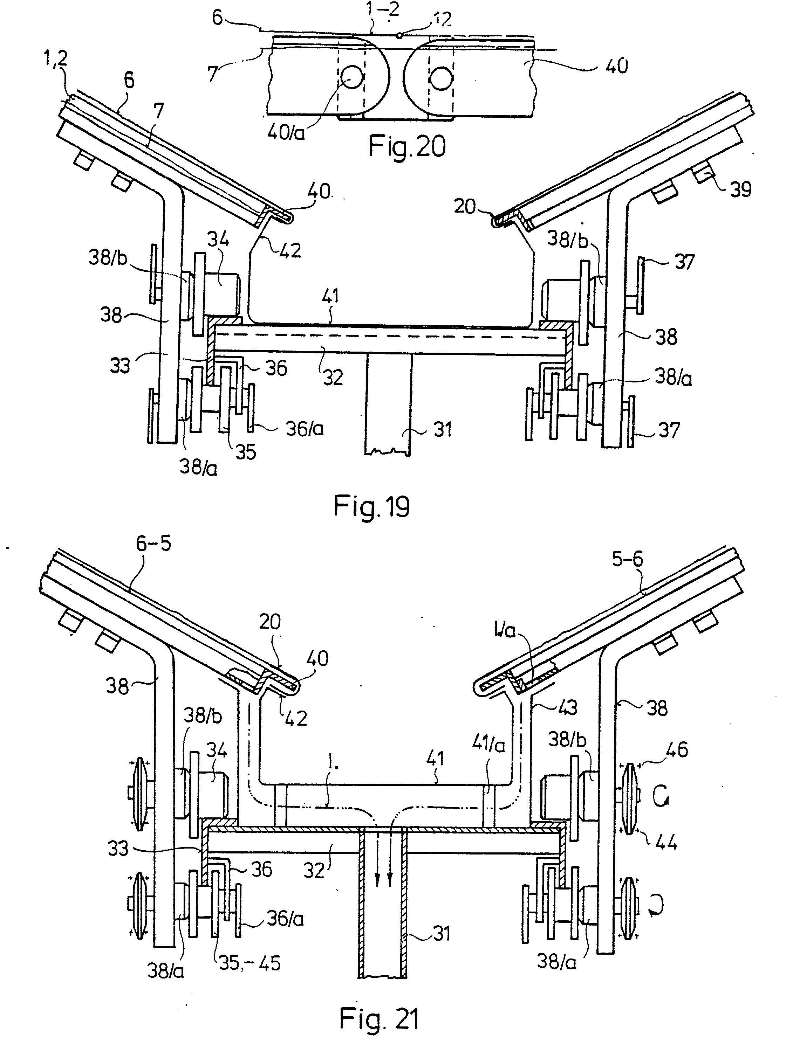

Figur 19 eine Kehlenkonstruktion für ein zusammenklappbares Gerüstwerk ;

Figur 20 eine gelenkartige Fangarmatur ;

Figur 21 einen doppelten Kehlenkanal ;

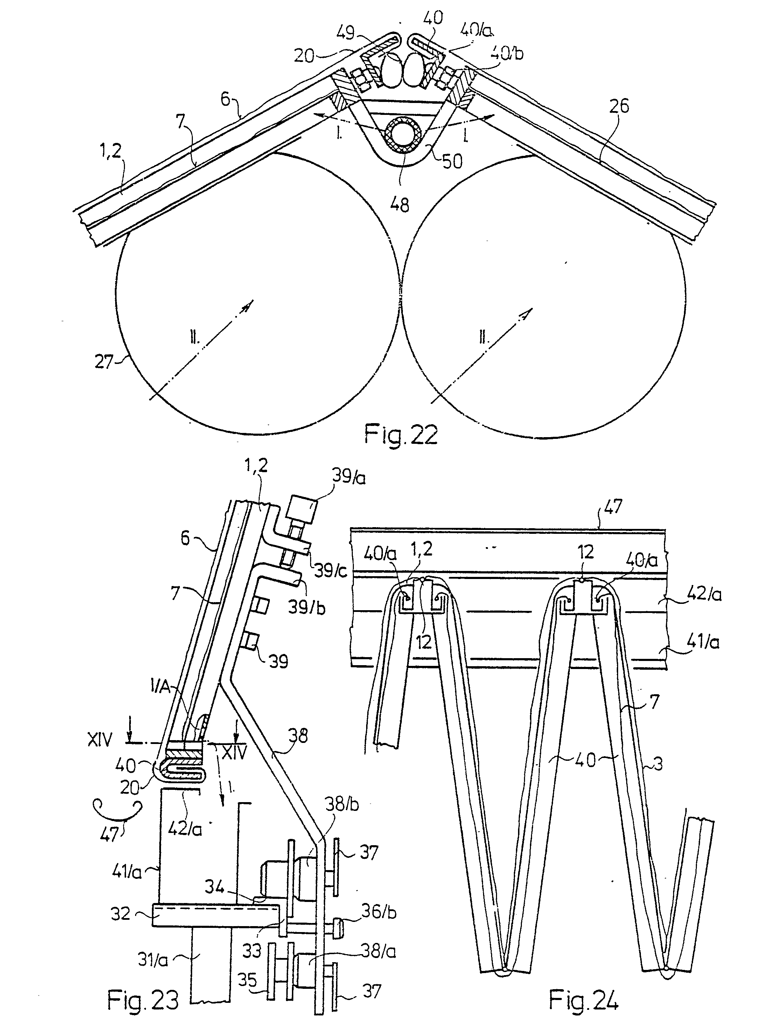

Figur 22 durch Flüssigkeit und Luft geheizte Träger ;

Figur 23 eine zusammenklappbare Trägerkonstruktion ;

Figur 24 die Schnittansicht XIV-XIV aus Fig. 23 ;

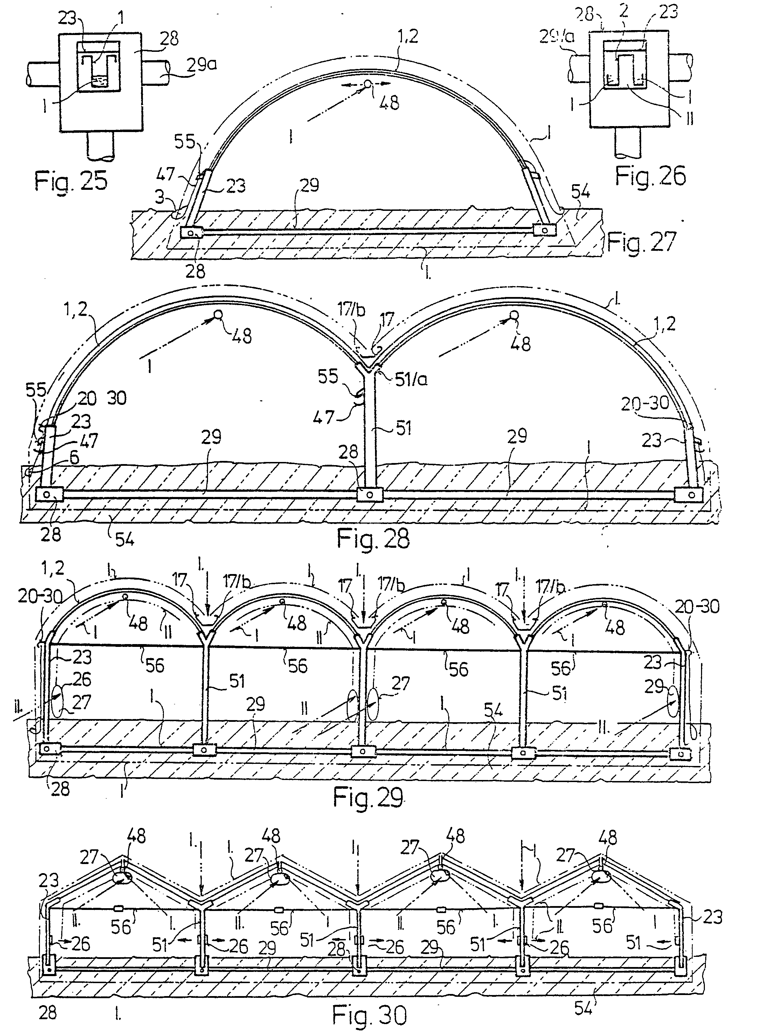

Figuren 25 und 26 den Fußbereich einer Säule ;

Figur 27 ein landwirtschaftliches Einschiff-Gebäude (Treibhaus) ;

Figur 28 ein landwirtschaftliches Zweischiff-Gebäude (Treibhaus) ;

Figur 29 ein mehrschiffiges Gebäude mit gebogenen Trägern ;

Figur 30 ein Mehrschiff-Gebäude mit geraden Trägern ;

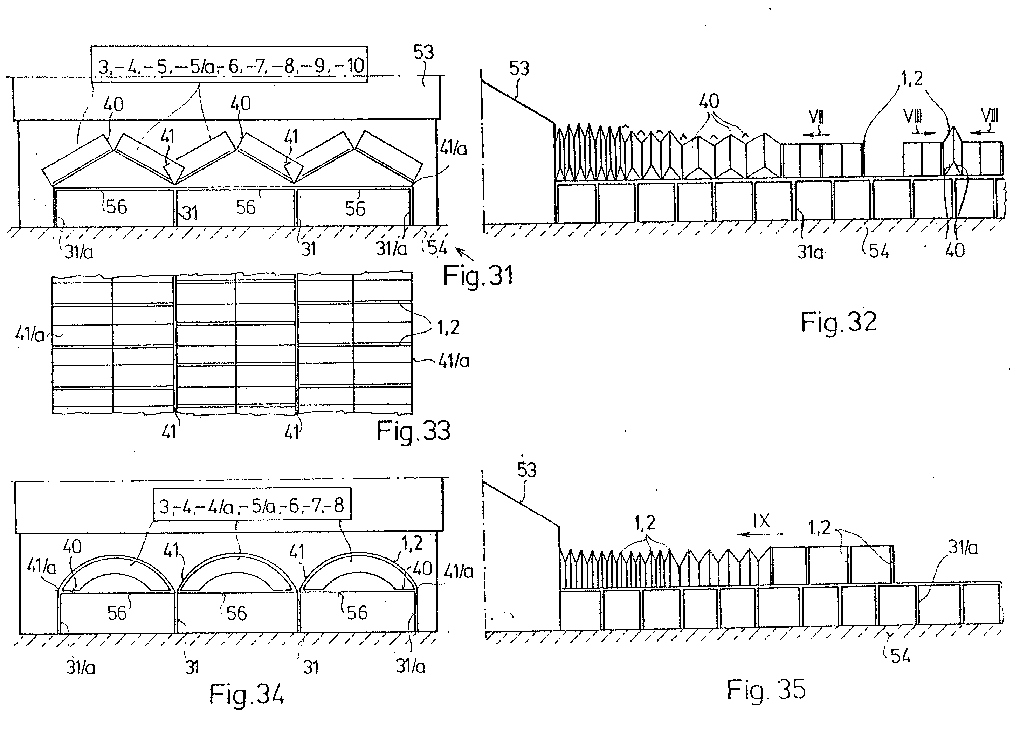

Figur 31 ein Mehrschiff-Gebäude mit zusammenklapbaren, geraden Trägern ;

Figur 32 die Seitenansicht des Gebäudes gem. Fig. 31 ;

Figur 33 die Draufsicht auf das Gebäude gem. Fig. 31 ;

Figur 34 die Vorderansicht eines Mehrschiff-Gebäudes mit gebogenen, zusammenklappbaren Trägern und die Seitenansicht des Gebäudes und eines Lagerhauses gem. Fig. 34.

Das beschriebene landwirtschaftliche Gebäude verfügt über gebogene oder gerade Träger 1, 2. Diese Träger tragen einfache oder doppelte Abdeckelemente 3, 4, 4/a, 5, 5/a, 6, 7, 8, 9, 10.

In den Trägern 1, 2 sind ein oder mehrere offene Kanäle 57 ausgebildet, in denen eine Strömung hergestellt wird. Bei den verschiedenen Lösungen ist die Ausbildung der Träger 1, 2 und die der Abdeckelemente 3, 4, 4/a, 5, 5/a, 6, 7, 8, 9, 10 untereinander variierbar. Die Abdeckelemente sind bei Pflanzenzucht lichtdurchlässig, bei Tierzucht und anderen Anlagen lichtundurchlässig.

Die Strömungsrichtung der verschiedenen Mittel, weiterhin die Bewegungsrichtung der Mechanismen sind mit I-IX Pfeilen bezeichnet.

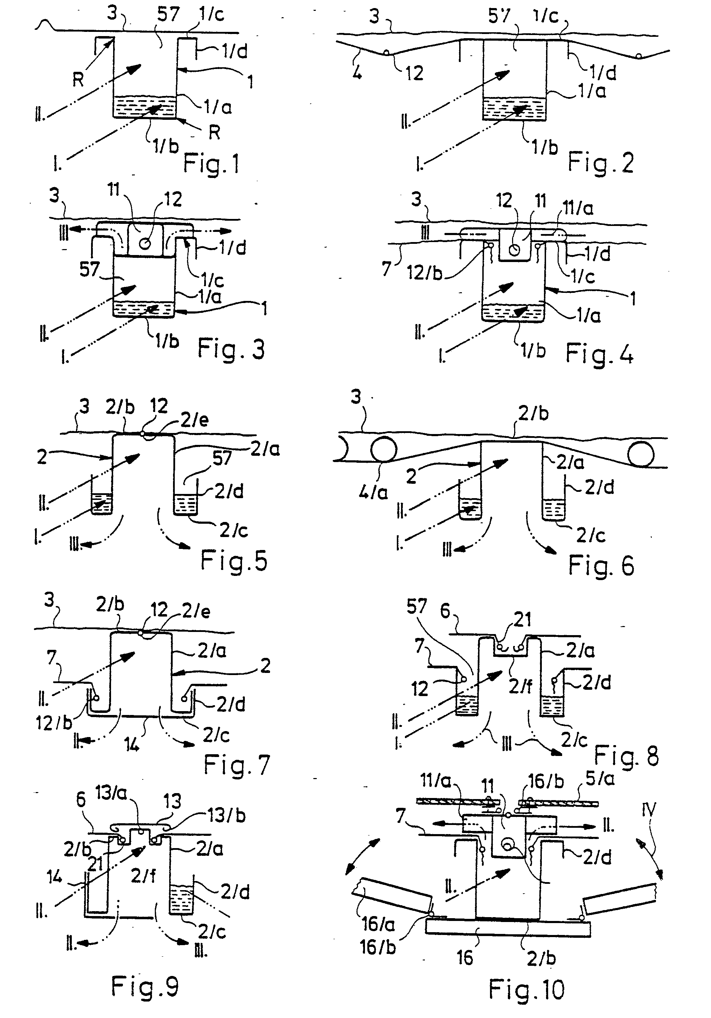

In Fig. 1 strömt das Wärmeträgermittel I im Kanal 57 und darüber die zwangsgeführte Luft II. Die Luft kommt mit der Oberfläche der Flüssigkeit in Berührung und wird mit Dampf angereichert. Der Wärmeaustausch der Luft erfolgt an der Oberfläche der Flüssigkeit und an den Höhenseiten 1/a des Trägers 1. Das einschichtige äußere Abdeckelement 3, zweckmässig Folienmantel, ist an die Schultern 1/c des Trägers gespannt. Der zurückgebogene Flansch 1/d erhöht die Steifheit des Trägers. In der Zeichnung ist R der Biegeradius ; das ist der lt. Vorschrift bezüglich des Oberflächenschutzbelags und der Plattendicke der jeweiligen Materialqualität ohne Beschädigung anwendbare Radius.

In Fig. 2 stimmt der Aufbau des Trägers mit dem in Fig. 1 überein. Ein Mehr im Vergleich zu Fig. 1 besteht hier darin, daß unter dem äußeren Abdeckelement 3 ein inneres wärmedämmendes Abdeckelement 4 angebracht ist, das mit einer Abdrückschnur 12 gespannt ist. Infolge der Spannung entsteht eine wärmedämmende Luftschicht zwischen den Abdeckelementen 3 und 4.

In Fig. 3 stimmt der Aufbau des Trägers mit dem in Fig. 1 überein. Das Abdeckelement 3 ist nicht direkt auf die Schulter 1/c gespannt, sondern in die von den zwei Seiten des Trägers begrenzte Öffnung. Die Abdrückschnur 12 faßt die Wärmedämmungseinlagen 11.

Die Wärmedämmungseinlagen 11 sind durch den Aufdrückdraht in die Öffnung des Kanals 57 befestigt.

Das Material der Einlage kann gebeiztes Holz oder Kunststoff sein. Die Mitte der Wärmedämmungseinlage 11 ist länger und schmaler als dessen Flügelteil, weshalb Lufteinblaseöffnungen von großer Anzahl und kleinem Querschnitt unter dem Abdeckelement entstehen, was die gleichmäßige Mittelverteilung als Ergebnis hat. Mit III ist der Weg der warmen Luft bezeichnet. Mit diesem vorgeschlagenen Ausführungsbeispiel kann das Durchbrennen bzw. Ausreiben der Folie vermieden werden. In Richtung auf die Umgebung ist im Weg des Wärmestromes eine Wärmedämmungsschicht gebildet, was Energieersparung bedeutet.

Fig. 4 stimmt mit Fig. 3 überein, wobei jedoch unter den Rohrgang 11/b der Wärmedämmungseinlage 11 ein inneres Abdeckelement 7 mit Abdrückschnüren 12/b gespannt ist. Das Gebäude ist so ausgebildet, daß jeder zweite Träger mit der Lösung laut dieser Zeichnung angebracht wird. Das zwischenliegende Rahmenprofil ist von ähnlichem Aufbau, aber darin strömt die Flüssigkeit I nicht. Die aus dem ersten Profil zwangsgeführte Luft III, zwischen den Abdeckelementen 3, 7 hindurchströmend, tritt in dieses Rahmenprofil durch die Lufteinblaseöffnung II/a ein und sie wird im von den Trägerteilen I/a, I/b begrenzten Kanal abgeführt. Mit dieser Lösung kann die Heizung und Kühlung der vom inneren Raumabgegrenzten ganzen Abdeckung verwirklicht werden.

In Fig. 5 ist das Abdeckelement 3 mit der Abdrückschnur 12 am Trägerteil 2/e befestigt. Im offenen, von den Trägerteilen 2/a, 2/c, 2/d abgegrenzten Kanal 57 strömt das Wärmeträgermittel I. Das heizt oder kühlt die Seiten des Gerüstwerkes, die auch als freiströmende, wärmeaustauschende Längsrippen funktionieren. Zweckes größerer Wärmeleistung wird im nach innen offenen Kanal Luft II, geströmt. Mit der Mengen- und Geschwindigkeitserhöhung der Luft wird auch die übertragbare Wärmemenge erhöht. III ist die aus dem Kanal austretende, am Wärmeaustausch teilnehmende Luft von erhöhter Geschwindigkeit.

Fig. 6 unterscheidet sich von der Lösung laut Fig. 5 darin, daß hier zweischichtige Abdeckung verwendet wird. Das Abdeckelement 4/a wird so ausgespannt, daß — vor dem Anbringen — Luftgängern auf der Folie hergestellt werden, und es wird die Folie nach ihrer Anbringung bzw. nach Bedarf aufgeblasen. Die auf diese Weise aufgeblasene, deckenartige innere Folie ist außerordentlich gut wärmedämmend und sichert darüber hinaus entsprechende Spannung an den Gerüstwerken. Das Aufblasen ist nur in dem Falle zweckmäßig, in dem der Bedarf an Wärmedämmung groß ist oder in dem die Abdeckung gegen den intensiven Windgang geschont werden muß.

In Fig. 7 ist das Abdeckelement 3 durch die Abdrückschnur 12 in der Nut 2/e befestigt. Das geteilte innere Abdeckelement 7 ist durch die Abdrückschnur 12/b an den Kanten des zurückgebogenen Flansches 2/d befestigt und gespannt. Die in der Richtung des Pfeiles II strömende Luft tritt aus dem halb geöffnetem Kanal stufenweise aus den Spalten den Luftabdeckung 14 in Richtung des Pfeiles III aus.

In Fig. 8 wird das geteilte äußere Abdeckelement 6 durch die Abdrückschnur 21 im Befestigungskanal 2/f befestigt und gespannt. Das geteilte innere Abdeckelement 7 ist mit der Abdrückschnur 12 an die Kante des zurückgebogenen Flansches 2/d befestigt und gespannt. Diese Lösung ist vorteilhaft, weil sie ermöglicht, die nach Abmessung kalanderte, faserverstärkte Folie oder andere Abdeckung einzeln ab- und anzumontieren. Damit kann die Ab-, dann Anmontierung im Falle von Reparatur, Lüftung oder Außen-Betriebsetzung einfach durchgeführt werden. Die den zwei Seiten des äußeren Abdeckelementes 6 und inneren Abdeckelementes 7 entlang führenden Abdrückschnüre 21 und 12 sind an den Kanten der Decke so angebracht, daß ihr Abstand voneinander mit dem Abstand der Trägerkanten des Gerüstwerkes voneinander übereinstimmt. Nach der Spannung ziehen sich die Abdrückschnüre 21 und 12 neben den Schultern neben dem Gerüstwerk nieder, wobei sie die Deckmantelteile in Querrichtung spannen. I ist das strömende Heiz oder Kühlmittel, II ist die zwangsgeströmte Luft. III ist die Luftströmung nach dem Wärmeaustausch durch den Kanal 57.

In Fig. 9 ist das geteilte Abdeckelement 6 durch ein Klemmband in den Befestigungskanälen 2/f befestigt und durch die Abdrückschnur 21 gespannt. Der Rand des geteilten Abdeckelementes 6 wird durch die Abdrückschnur 21 dicker sein, die Ränder setzen sich in den Befestigungskanal 2/f. Der Distanzhalter 13/a verhindert, daß sich die Kante 13/b auf die Seite des Trägerelementes 2/b auflegt. In der entstandenen Spalte kann das Abdeckelement 6 leicht verschoben werden. Mit dieser Lösung kann das einfache Öffnen und Schliessen der Zuglöcher, weiterhin das wiederholte Hoch- und Niederschieben der Abdeckelemente 6 gesichert werden. Die Pfeile I, II, III sind gleich wie in Fig. 8 durch das Gelenkband 16/b an den die Luftströmung trennenden Wärmedämmer befestigt.

In Figur 10 ist das steif-elastische Abdeckelement 5/a durch das Gelenkband 16/b an dem die Luftströmung trennenden Wärmedämmer befestigt.

An die Breitseite des Trägerteiles 2/b schließt sich eine gelenkartige Konsole 16 an, an die sich der Deckenträger — und Leiterarm 16/a über das Gelenkband 16/b anschließt, das während des Zusammenklappens das Ausheben aus der Ebene, während des Öffnens das Halten in der Ebene sichert. Diese Lösung zeigt die zweckmäßige Ausführungsform bei zusammenklappbaren Gebäuden, wo das Zusammenklappen durch Bewegung in der Richtung des Pfeiles IV erfolgt. Das Material des Abdeckelementes 5/a ist zweckmäßig ein kunststoffartiges Material bzw. ein selbsttragender Kunststoff mit einer Lebensdauer von mehreren Jahren in lichtdurchlässiger oder lichtundurchlässiger Ausführung.

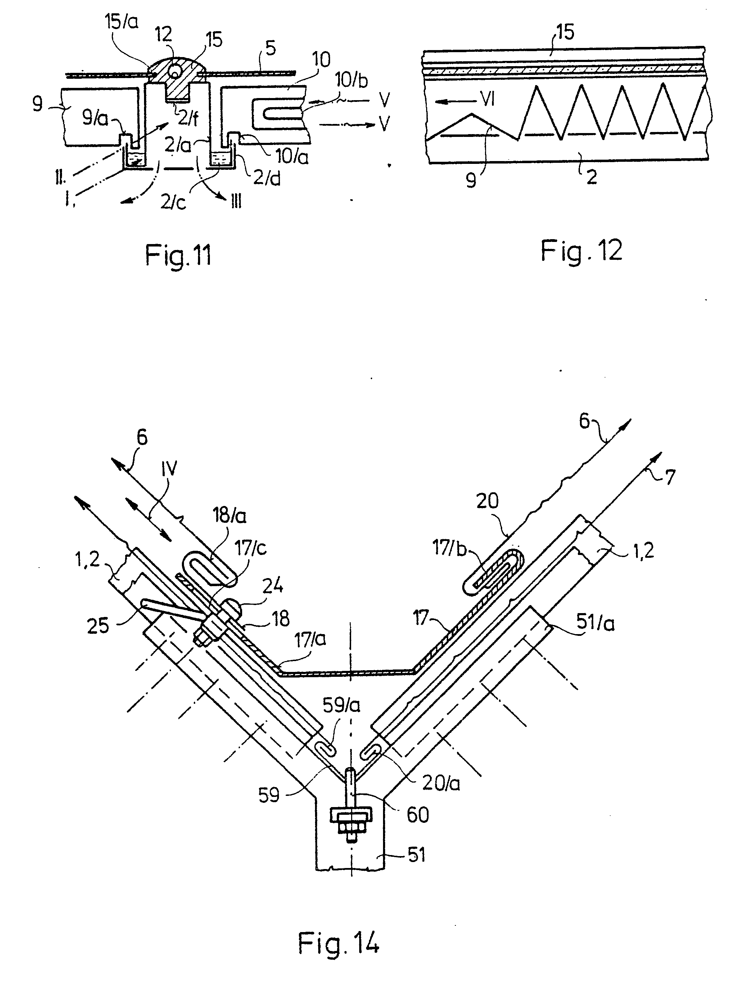

In Fig. 11 fügt sich ein entweder aus Gummi oder aus Kunststoff extrudiertes elastisches Befestigungsprofil 15 in den Befestigungskanal 2/f durch Befestigung des Abdrückdrahtes 12 ein. An die längliche Öffnung 15/a entlang der zwei Seiten des Befestigungsprofils 15 schließt sich luft- und wasserdicht das steife Abdeckelement 5 an, das im Falle von Treibhäusern mit Überdeckung von Glasscheiben, bei anderweitiger Anwendung mit Überdeckung von dünnen Aluminium- oder Kunststoffplatten aneinanderer angeschlossen ist. Das Gerüstwerk und die klimatechnischen Teile stimmen mit denen gemäß Fig. 8 und 9 überein.

Das Abdeckelement 9 ist an den Kanten des zurückgebogenen Flansches 2/d zusammenklappbar beweglich. Das Material des Abdeckelementes kann Luftblasen- oder Zweischichtenfolie als lichtdurchläßiges Material oder lichtundurchläßiges Material aus dünnen Platten sein. An den Längskanten sind diese mit einer Verstärkungsschiene gegen Verbiegung gesichert. Das innere Abdeckelement bewegt sich zusammen mit dem Oberflächenteil 9/a auf einer Zwangsbahn an der Kante des Flansches 2/d. Die Bewegung kann automatisch oder handgesteuert sein mit einem in der Zeichnung nicht angeführten Mechanismus.

Auf der rechten Seite der Zeichnung befindet sich die harmonikaartige Rohrgangplatte 10/a der inneren Abdeckung, deren Rohrgänge flexibel in Reihe geschaltet sind. Wenn eine Fläche der Platte zweckmäßig mit wärmedämmende Schicht versehen und ihr Teil gegen die Sonne schwarz gestrichen ist, kann das am Gerüstwerk ausgespannte und mit Flüssigkeit in Reihe geschaltete innere Abdeckelement 10 gleichzeitig als Sonnenstrahlenkollektor funktionieren. Infolgedessen kann das ganze Treibhaus in der toten Saison im Sommer ohne Mehrinvestition als Solarkraftwerk umgeändert werden und zwar mit dem in der Zeichnung nicht angegebenen Wärmeenergieverwerter, der irgendeine der bereits bekannten Lösungen sein kann. Im Rohrgang 10/b strömt das aufzuwärmende Wasser in Richtung V. Die zusammengeklappte harmonikaartige, innere bewegbare Abdeckung befindet sich in Grundstellung am oberen oder unteren Teil des Gerüstwerkes in der Umgebung des Grates oder der Kehle. Hier schließt sie sich an die Rohrleitung an, die das Speisewasser liefert und teilt. Während des Betriebes sinkt das Abdeckelement 10 auseinandergezogen an die Kehle oder steigt zum Grat auf, wo es sich an den Warmwassersammler anschließt. In den kalten Monaten können die Rohrgänge des harmonikaartigen inneren Abdeckelementes 10/b mit warmem Wasser gespeist auch als Oberflächen-Wärmestrahler, für die Pflanzen verwendet werden.

Falls in den Rohrgängen kaltes Wasser strömt, kann das Gebäude als gekühltes Lager in der Zeit außerhalb der Zucht ausgenutzt werden. In diesem Fall muß die äußere Oberfläche nicht schwarz gestrichen werden. Auch in einem anderen Ausführungsbeispiel mit deckenartiger innerer Abdeckung, das in der Zeichnung nicht dargestellt ist, kann die Wärmeerzeugung mit Solarenergie verwirklicht werden. Wenn die Abdeckungen aus Folie bestehen und die innere Folie dicker ist, kann das aufzuwärmende Wasser von unter nach oben im Blasenteil der Abdeckung strömen. Damit kann die schlauchartige Auffüllung der deckenartigen Abdeckung auch bei kleiner Wassergeschwindigkeit gesichert werden. Die Ableitung des warmen Wassers kann in den Kehlen 17, 41, 43 erfolgen.

In Fig. 12 sind das Anschlußprofil 15 und das Gerüstwerk 2 dargestellt, weiterhin das harmonikaartige innere Abdeckelement 9 teilweise zusammengeklappt oder geöffnet. Pfeil VI zeigt die Richtung des Auseinanderziehens.

Die in Fig. 13 dargestellte Lösung kann bei irgendwelchem Gerüstwerktyp — aber zweckmäßig beim Typ gemäß Fig. 8 und 9 — und Gebäudeausführung als wiederholt bewegbarer Lüfter oder zum einheitlichen Niederlassen bzw. Hochziehen der ganzen Abdeckung verwendet werden. In den Sommermonaten befinden sich z. B. die Abdeckelemente 6, 7 — auf die Spindel 64 aufgewickelt — in der Gratabdeckung 72. Bei erneuter Inanspruchnahme werden die Abdeckelemente 6, 7 in der Richtung des Pfeiles X bewegt.

Die Antriebswellen 61 sind parallel zur Längsachse des Gebäudes an den Trägern mit in der Zeichnung nicht dargestellten Konsolen angebracht.

Die Spindeln 64 sind auf den Antriebswellen 61 gelagert und dort freilaufen aufmontiert. Die mit Deckenendbegrenzern 20/b und mit Abdrückschnüren 21 besäumten Abdeckelemente 5, 7 werden auf den zylindrischen Mantel der Spindel aufgewickelt. Die Mitnehmerdrähte 65 sind auf die zwei Seiten der Spindel 64 aufgerollt. Diese Drähte sind auch an den Deckenendbegrenzern befestigt.

Die Spannung und die Zurückwicklung der Mitnehmerdrähte 65 im Gerüstwerk sind durch weiter Kräfte 66 gesichert, die durch in der Zeichnung nicht dargestellte Lagerkonsolen freilaufend am Gerüstwerk befestigt sind und zwar so, daß die Mitnehmerdrähte 65 in den entsprechenden Kanälen der Träger beweglich sind.

In der Zeichnung ist 51, 51/a eine Trägersäule mit Gabelkopf, 39 eine Befestigungsschraube, 50/a eine Sattelsteife des Gerüstwerkes.

Das zu den Trägersäulen 51, 51/a mit Gabelkopf strömende, mit -...-...- bezeichnete Strömungsmittel, das durch die Wärmeträgermittel-Leitung 48 gefördert und in Richtung des Pfeiles I angeschlossen ist, sichert die Heizung und die Kühlung.

Der Deckenendbegrenzer liegt in unterer Betriebsstellung in Überdeckung mit der Ebene 17/a der Kehle 17. Mit dieser lückenfreien Deckung wird die Luftdichtheit und der Abfluß des Niederschlages in die Kehle gesichert.

Der zwischen den Abdeckelementen 6, 7 niederschlagende und abfließende Dunst fliesst in Form von Flüssigkeit in der unteren Kehle 59 ab, weshalb die Kehlen 17 und 59 mit Neigung gebaut werden müssen.

Mit der dargestellten Lösung kann die vollkommene Lüftung des Gebäudes, weiterhin die Lagerung außer Gebrauch und die wiederholte Verwendung der Folie oder einer anderen Abdeckung erfolgreich verwirklicht werden.

Fig. 13/a stellt den Betätigungsmechanismus der Abdeckelemente 6, 7 in größerem Maßstab und mehr detailliert dar. Die Antriebswelle 61 kann mit dem in der Zeichnung nicht dargestellten Antrieb in den Richtungen des Pfeiles XI in den Lagerbohrungen der Trägerkonsole 62 gedreht werden. Auf die Welle 61 sind mit gerillter Verriegelung je zwei Mitnehmer-Reibräder 63 aufgesetzt, von denen mindestens eines in Längsrichtung verschiebbar ist. Zwischen den zwei Reibrädern 63 befindet sich die auf den Lagern 70 freilaufende Spindel 64, deren jeweilige Position durch den Halter oder die Bremse 63 gesichert ist. Auf die Spindel 64 sind die Abdeckelemente 6, 7 mit den nötigen Armaturen, den Deckenendbegrenzern 20/b und den Abdrückschnüren 21, sowie die Mitnehmerdrähte aufgewickelt. Auf dem Vorsprung der Trägerkonsole 62 ist die Ziehklinke 67 am Drehbolzen 68 verdrehbar angebracht. Durch Ziehen der Schnur 69 wird die Stirnfläche 63/a des Mittel-Reibrades 63 mittels des Armes 67/a der Ziehklinke 67 an die Stirnplatte 64/a der Spindel 64 gepresst. In zusammengepreßtem Zustand dreht sich die Spindel 64 zusammen mit der Antriebswelle 61, wobei die Befestigungbremse gelockert werden muß. Diese Lösung verhindert das eventuelle Zerreissen, weil das Antriebsmoment der Reibräder so bemessen werden muß, daß das Moment kleiner sein soll als die zum Zerreissen der Deckkonstruktion benötigte kritische Zugspannung. Mit Lösen der Ziehklinke 67 und Drücken der Befestigungsbremse 71 kann das lagenstabilde Fassen der Abdeckelemente 6, 7 in jedem Betrieb gesichert werden.

Die obige Lösung ermöglicht, daß die ganze Abdeckung durch zentrale Steuerung gleichzeitig oder nur begrenzt, auf Wunsch nur in je einem Sektor zwecks Lüftung bewegt wird.

Ein spezieller Vorteil der vorgeschlagenen Ausführung ist, daß sie eine große Betriebssicherheit aufweist, zentrisch steuerbar ist, die Abdeckung schont und unempfindlich für die Produktions- und Montage-Ungenauigkeiten ist, diese sogar kompensiert.

Fig. 14 stellt einen aus der Kehle 17 gebogenen Kehlenteil für Mehrschiff-Gebäude dar. 6 ist das Abdeckelement, 20 die Deckenendbegrenzer-Platte, das Verbindungsprofil 17/d schließt sich an den Kehlenrand 17/b an.

Auf der linken Seite der Zeichnung schließen sich das Abdeckelement 6 und die Deckenendbegrenzer-Platte 20 an den zurückgebogenen Flansch 18/a des Gleitbleches an.

In Fig. 14 paßt sich das Gleitblech 18 in der Ebene an die ebene Fläche 18/a an, die aus dem Blech 17 gebogen ist und an der es mit Schrauben 24 und mit Muttern 25 befestigt ist. Die Schrauben 24 sind lagestabil in den Bohrungen der Gleitbleche 18 befestigt. Durch Lockerung der Muttern 25 können die Schrauben 24 nach unten und oben in den länglichen Durchbrüchen der Kehle 17/c vertikal in den Richtungen des Pfeiles IV bewegt werden.

Bei Mehrschiff-Gebäuden sollen die entsprechend bemessenen Abdeckelemente 6 in solcher Weise auf die Träger 1, 2 aufgepaßt werden, daß das eine Ende des Abdeckelementes 6 mit Hilfe der Deckenendbegrenzer-Platte in den Kehlenrand 17/b an einer Seite der Kehle 17 eingehängt ist, dann soll die Deckeendbegrenzer-Platte 20 auf die nebeneinander liegenden zwei Träger 1, 2 — neben Hochziehen der Decke — an der anderen Seite der Decke in den zurückgebogenen Flansch 18/a des Gleitbleches 18 an der hiesigen Seite der Kehle 17 von der anderen Seite eingehängt werden.

Die Abdeckelemente 6 werden am Träger 1, 2 dadurch gespannt oder nachgespannt, daß durch Lockerung der Muttern 25 und Bewegung der Schrauben 24 im Durchbruch der Kehle 17/c nach unter das Gleitblech 18 bis zur Spannung des Abdeckelementes 6 in die Richtung des Pfeiles IV gezogen und dann die Muttern 25 lagestabil befestigt werden. Bei Dehnung des Abdeckelementes 6 kann dieser Vorgang nach Bedarf wiederholt werden.

In der Zeichnung ist das innere Abdeckelement 7 dargestellt, das mit dem Deckenendbegrenzer 20/a an den zurückgebogenen Flansch 59/a der unteren Kehle 59 angeschlossen ist. Das innere Abdeckelement 7 kann mit dem Anziehen der Anzugsschraube 60 an die Träger 1, 2 gespannt werden, weil das innere Abdeckelement 7 mit der Bewegung der unteren Kehle 59 gespannt wird. Der zwischen den Abdeckelementen 6, 7 niederschlagende und abrieselnde Dampf (Feuchtigkeit) fließt in der unteren Kehle 59, der Niederschlag in der oberen Kehle 17 ab. Deshalb müssen diese mit Neigung gebaut werden.

Der in den Trägern 1, 2 fließende Wärmeträger strömt an den Säulen 51/a und 51 mit Gabelkopf weg.

In Fig. 15 ist das geteilte äußere Abdeckelement 6 an dem aus einer Platte 20 gebogenen Endbegrenzer angeordnet, der an seinem zurückgebogenen Ende verstärkt ist. Daran schließt sich die Sicherungseinlage 22 an. An den Kanten der Platte 20 sind Ringe 20/a ausgebildet, an die bzw. an die Bohrung 20/b die Abdrückschnüre 21 mit verstellbarer Länge angeschlossen sind. Auf das Abdeckelement 6 sind an längs der beiden Seiten in Längsrichtung Hülsen 6/a aufgeschweißt, in deren Gewinde die Abdrückschnur 21 eingeführt ist.

In Fig. 16 ist ein in den Boden zu stellender Betonsockel 28 dargestellt. In die durchgehende Aussparung dieses Sockels ist die Säule 23 gestellt, die zweckmäßig kaltgeformt oder geschweißt und von geschlossenem Profil ist. An der inneren Seite befindet sich der Luftkanal-Anschluß 26 oder in anderer Anordnung ist das die Stelle des Luftaustrittes.

Der Luftkanal 26 soll in solcher Höhe vom Boden angebracht werden, daß der hydrostatische Druck der in der Säule 22 entstehenden Wassersäule genügend groß zur Strömung der Flüssigkeit in den Bodenheizrohren 29 sein soll. Der in der Zeichnung dargestellte aufblasbare Luftkanal schließt sich mit einem Flansch 23/b an die Säule 23 an. Außer Betrieb schmiegt sich der aufblasbare Luftkanal 27 locker hängend an die Seitenwand. Falls dieser Kanal lichtdurchlässig ist, wirft er keinen Schatten und trägt zur Wärmedämmung bei, weshalb er die Kühlwirkung der Seitenwand in gewissem Umfang hindert. An der äußeren Fläche des Säulenvorsprungs 23/a der Säule 23 befindet sich die Öffnung 23/c. In den Säulenvorsprung 23/a sind die Träger 1, 2 eingeschoben, deren Lagebefestigung mit Hilfe der Schrauben 24 und der Befestigungsmuttern 25 gesichert ist. Die Höheneinstellung der Bögen kann durch Nieder- oder Hochschieben der Schraube 24 in der Öffnung 23/c erfolgen. Am Betonsockel 28 befinden sich die Stutzen des Bodenheizrohres 29, die die Stabilität in Vertikal- und Seitenrichtung sichern.

Fig. 17 stellt Seitenbegrenzer 30 dar, die die einzelnen Säulen 23 in der Höhe des Säulenvorsprunges 23/a mit einer Ringeinführung oder Schraubenverbindung, die in der Zeichnung nicht dargestellt ist, verbinden.

Fig. 18 zeigt den Schnitt XV-XV des Seitenbegrenzers 30 aus Fig. 17. Das Abdeckelement soll von zwei Seiten in geteilter Form auf die Träger aufgepaßt werden. Das eine Ende des unteren Abdeckelementes 6 soll in den Flanschring 30/b eingehängt werden, das andere Ende der Decke soll in der Bodennähe des Säule 23 an der in der Zeichnung nicht dargestellten Stelle im Boden auf bekannte Weise befestigt werden. Diese Deckenstrecke kann nach Bedarf auch die Funktion des Seitenlüfters erfüllen. Das Ende der zweiten längeren Teile des Abdeckelementes 6 soll ebenfalls mit den Deckenendbegrenzer-Platten gefaßt werden. Eine Platte soll in den Flansch 17/a der Kehle 17 eingehängt werden oder bei Einschiff-Gebäude in den Flanschring 30/b an der anderen Seite. Die Abdrückschnüre 21 des auf solche Weise aufgepaßten Abdeckelementes passen sich an die Befestigungskanäle 2/f an. Das Abdeckelement soll so gespannt werden, daß die Mutter 25 gelockert und mit Hilfe der Schraube 24 die Träger nach oben gehoben werden, wodurch deren relative Länge größer wird, als die des an zwei Enden eingefaßten Abdeckelementes 6.

Der Längenunterschied ergibt die Spannung der Decke. Während des Betriebes ist es zweckmäßig, auch die nachträglichen Zusatzspannungen mit dieser Methode durchzuführen. Beim Abmontieren des Abdeckelements 6 sollen die Endbegrenzer aus den Ringen 30/a, 30/b im Vergleich zur obigen Lösung umgekehrt ausgehängt werden, das Gerüstwerk soll im Säulenvorsprung 23/a gesenkt werden.

In Fig. 19 ist an der Säule 31 die Kehle 41 auf der Querträgerkonsole 32 angebracht, wobei die Kehle 41 einen zurückgebogenen flexiblen Flansch 42 hat. Daran schließt sich luftdicht das gelenkartige Deckenfangprofil an, woran die Endbegrenzerplatten angeschlossen sind. Die Träger sind mit Befestigungsschrauben 39 an den Trägerkonsolen 38 befestigt. Die Trägerkonsolen 38 haben je zwei Lagergehäuse 38/b und je ein Lagergehäuse 38/a, in denen die zwei Trägerrollen 34 und eine Laufrolle 35 drehbar sind. Die Wellen der Rollen sind zweckmäßig exzentrisch verstellbar ausgebildet.

Mit Verdrehen der Arme 37 können die Rollen lückelos an die Oberfläche der Träger-Leitschiene 33 angeschlossen werden. Die Rollen 34, 35 können sich auf der Leitschiene 33 verschieben. Das sichert die Möglichkeit zum Öffnen und zusammenklappen der Gebäude. Eine lagestabile Einstellung kann mit Hilfe des Befestigungsbackens 36 erreicht werden, der mit Hilfe des Spindelarmes 38/a mit Gewinde an die Träger-Leitschiene 33 gedrückt wird. Die Bewegung der Befestigungsbacken 36 und der Träger kann auch mit Servo-Betätigung durchgeführt werden. Von der Abdeckung kommt der Niederschlag in die Kehle 41. Deshalb soll diese eine Neigung und an den Enden eine Niederschlagwasserableitung aufweisen.

Fig. 20 ist ein Abschnitt der Fig. 19. Bei dieser Ausführung sind die Enden der Träger abgeschlossen. An der abgeschlossenen Bodenplatte ist ein Dreh- und Distanzhalterbolzen 40/a ausgebildet. Darauf dreht sich das gelenkartige Deckenfänger-Profilpaar 40. Die Abdeckelemente 6, 7 werden durch die Abdrückschnur 12 oder einen Draht bewegungsfrei am Gerüstwerk befestigt.

In Fig. 21 werden — bei Bewegung der Träger — die Rollen 34 und 35 mit Hilfe eines Kettenantriebes 46 und Kettenrädern 44 gedreht. Zwecks größerer Haftung und gesteuerter Betätigung ist es zweckmäßig, die untere Kante der Träger-Leitschiene 33 als Zahnstange auszubilden, woran die bei 45 gezahnte Laufrolle 35 verschiebungsfrei rollen kann. Diese Lösung ist im Falle der Anwendung von steifen Abdeckelementen 5 und 5/a zweckmäßig. Bei einer anderen Lösung sind die Abdeckelemente 6, 7 zum Abdecken geeignet. Die Kehlen 41, 42 schließen sich auf den Füßen 41/a an die äußere Kehle 43 an, in die Kehle 41 fließt das Niederschlagwasser der Abdeckelemente 5 und 6. Das in den Kanälen der Träger ließende Wärmeträgermittel fließt aus der Öffnung I/a in der Richtung des Pfeiles I in die Kehle 43, dann tritt es durch den Hohlraum der Säule 31 aus. Die Koppelkehle 41 muß eine Neigung aufweisen.

In Fig. 22 trägt der Träger selbst die Abdeckelemente 6, 7. Das Abdeckelement 6 schließt sich mit dem Endbegrenzer 20 an das Deckenfangprofil 40 an. Das Fangprofil 40 wird durch Dreh- und Distanzhalterbolzen 40/b befestigt. Die Sattelsteife 50 faßt die zwei einander gegenüberliegenden Gerüstwerke zusammen. Unter den einander gegenüberliegenden Stangen des Fangprofils 40 befinden dich die Dichtungs-Luftschläuche 49 einander gegenüber. In zusammengeklapptem Zustand deformieren sich diese Zylinderschläuche zu ovaler Form und sichern mit ihrer Flächenhaftung die Wärme- und Luftisolierung des Sattels.

Zwecks vollständiger Isolierung ist die Produktions- und Montagegenauigkeit sehr wichtig. Die Verschluss-Ungenauigkeit des Dichtungsschlauches 49 kann mit Verstellung des Abstandes der Deckenfangprofile 40 zueinander korrigiert werden. Das kann mit Hilfe der Einstellverschraubung 40/b erfolgen. An die Träger schließt sich am Grat der Gebäude mit Luftkanalanschluß 26 ein Luftkanal 27 an, der zweckmäßig aus durchsichtiger Folie steht und deshalb keinen Schatten wirft. Die Sattelsteife 50 trägt die flexible Wärmeträgermittel-Leitung 48. Beim Zusammenklappen des Gebäudes reichen die flexiblen Konstruktionselemente in den Gebäuderaum hinein.

In Fig. 23 schließt sich der Seitenfuß 41/a des Einschiff- oder Mehrschiff-Gebäudes luftdicht an den zurückgebogenen flexiblen Flansch 42/a an. Das Abdeckelement 6 wird durch die Deckenendbegrenzer-Platte 20 am Fangprofil 40 befestigt. Das wird durch den Dreh- und Distanzhalterbolzen 39/a an die Träger 1, 2 angeschlossen. Diese sind mit Hilfe von Befestigungsschrauben 39 an der Trägerkonsole 38 befestigt. Die Trägerkonsole besitzt zweckmäßig zwei Lagergehäuse 38/a und ein Lagergehäuse 38/b. In diesen gelagert drehen sich die Trägerrollen 34 und die Laufrollen 35. Die Rollen ermöglichen, das Gerüstwerk in der Richtung der Längsachse an der Träger-Leitschiene 33 zu verschieben. Die lückenfreie Berühung der Rollen mit der Schiene kann durch Verdrehen des Armes 37 erreicht werden. Die Lagebefestigung des Gerüstwerkes kann durch den Befestiger 36/b gesichert werden. Die Betätigung des Gerüstwerkes kann mechanisiert oder automatisiert werden.

Die Träger-Leitschiene 33 schließt sich an die Querträgerkonsole 32 an, die die Kehle 41/a trägt und an die seitliche Säule 31/a angeschlossen ist, die in der beschriebenen Weise gleichartig wie die mittlere Säule 31 in den Boden gestellt ist. Der Kanal 47 sammelt und leitet den vom Abdeckelement 6 abfließenden Niederschlag fort. Das in den Kanälen der Träger strömende Wärmeträgermittel fließt aus der Öffnung I/a in die als Fuß ausgebildete Kehle 41/a in Richtung des Pfeiles I. Die Distanzhalterung wird dadurch eingestellt, daß die Arme 37 in die obere Lage gestellt, die Befestigungsschrauben 39 gelockert werden, und die auf dem Lager 39/b befindlichen Einstellschrauben 39/a in der Konsole 39/c gedreht werden, bis die am Träger 1, 2 gefangene Deckenendbegrenzer-Platte 20 um einige mm vom flexiblen Kehlenflansch 42/a steht.

In dieser Position werden die Befestigungsschrauben 39 angezogen. Das Zusammenklappen des Gebäudes soll später ebenfalls in dieser Position durchgeführt werden. In Betriebsposition werden die Arme 37 in die untere Lage bewegt, und infolgedessen schließen sich die Oberflächen 20 und 42/a zusammen. Zwecks besserer Dichtung ist es empfehlenswert, Dichtungsmaterial auf die Oberfläche 42/a zu kleben.

In Fig. 24 ist der Schnitt XIV-XIV der Fig. 23 dargestellt. Die Zeichnung stellt dar, wie sich die Konstruktionselemente beim Zusammenklappen des Gebäudes ordnen.

In Fig. 25 sind der Betonsockel 28, der Bodenheizanschluß 29/a, die in den Boden gestellte Säule 23 und der Träger 1 mit einem Kanal dargestellt.

In Fig. 26 sind der Betonsockel 28, der Bodenheizanschluß 29/a, die in den Boden gestellte Säule 23 und der Träger 2 mit zwei Kanälen, dem Arbeitsgang des strömenden flüssigen Wärmeträgermittels I und der strömenden Luft II, dargestellt.

In Fig. 27 sind die Träger an zwei Seiten mit den in den Boden gestellten Säulen 23 verbunden, die im Boden 54 an Betonsockeln 28 befestigt sind. Daran schließt sich das Bodenheizrohr 29 an. Am Grat entlang führt die Wärmeträgermittel-Leitung 48, wovon das gemäß I fließende Heizmittel in die Kanäle der Träger stufenweise abzweigt. In der Zeichnung ist der Strömungsweg des Heizmittels mit ...-...- gezeichnet. Falls keine Bodenheizung besteht, rieselt das Heizmittel durch den Überlaufstutzen 55 aus dem Gerüstwerk in den Kanal 47. Bei Bodenheizung erfüllt der Überlaufstutzen 55 die Funktion der Sicherheitsableitung im Falle einer Verstopfung. Der Kanal 47 dient auch der Ableitung des Niederschlags.

In Fig. 28 wird das an zwei Seiten in den Boden gestellte Abdeckelement 6 von den Trägern 1 und/oder 2 getragen, die an die seitlichen Säulen 23 angeschlossen sind, welche im Boden 54 auf Betonsockeln 28 stehen. In der Mitte umfaßt die mittlere Säule 51 mit ihrem Gabelkopf die erwähnten Träger. Die Kehlen 17, 17/a dienen zum Fassen der Abdeckelemente und zum Ableiten des Niederschlags in der Mitte. Der gabelartige Säulenkopf 51/a kann zweckmäßig durch Aufschneiden und Zurückbiegen des geschlossenen Profils der Säule 51 gebildet werden. Die Organe zum Fassen der Abdeckelemente sind der Anschlußflansch 17/b und die in der Zeichnung nicht dargestellte Endbegrenzer-Platte sowie weiterhin das Seitenbegrenzer-Profil. Von der Heizmittelleitung 48 zweigt das gemäß Pfeil I strömende Heizmittel stufenweise in die Kanäle der Träger ab. Die Strömungsrichtung des Heizmittels ist mit ...-...- bezeichnet. Es ist zweckmäßig, das Rohr 29 der Bodenheizung nur im Falle eines Wärmeträgers mit größerer Eintrittstemperatur vorzusehen. In Abwesenheit einer Bodenheizung fließt das Wärmeträger-Heizwasser durch den Überlaufstutzen 55 aus den Trägern in den Kanal 47. Bei Bodenheizung ist der Überlaufstutzen 55 die Sicherheitsableitung, falls in den Bodenheizröhren Verstöpfung auftritt. Der Kanal 47 leitet auch den Niederschlag fort.

Fig. 29 stellt einen prinzipiellen Aufbau dar, weshalb die Bezeichnungen mit denen der Fig. 28 übereinstimmen. Ein Mehr besteht darin, daß hier ein Luftkanal 27 für die zwangsgeführte Luft und eine Quersteife 56 vorgesehen sind, die neben der Erhöhung der Stabilität des Gebäudes auch dem Tragen von Kriechpflanzen dient. Das Haus kann eine beliebige Anzahl von Schiffen aufweisen. Aus agronomischen Gesichtspunkten ist es zweckmäßig, den Luftraum zu teilen. Der Weg des Heizmittels I ist mit -...-..., der der zwangsgeführten Luft mit -...-... bezeichnet. Das Erfassen und Spannen des Abdeckelementes ist in Fig. 14 dargestellt.

Fig. 30 stellt ein Mehrschiff-Gebäude dar, das zum Tragen von Abdeckelementen 5, 5/a geeignet ist, das jedoch auch für andere Typen von Abdeckelementen erfolgreich anwendbar ist. Die vom Grat abströmende Luft I kommt über den Luftkanal 27 durch Zwangsströmung in den Kanal 47 des Gerüstwerks. Dies dient auch der Wärmeenergiesparung. Der jeweilige wärmste Punkt des geschlossenen Gebäudes ist in der Umgebung der Sattelhöhe. Diese wärmste Luft wird in die Bodennähe zurückgeführt. Damit kann auch eine Überheizung vermieden werden. 26 ist die Luftkanal-Abzweigung, die Strömung des Wärmeträgermittels I ist mit -...-..., die Richtung der zwangsgeströmten Luft II mit -...-... bezeichnet. Bei diesem Gebäudetyp kann die anhand der Fig. 11 und 12 dargestellte Ausnutzung mit Sonnenkollektoren bzw. die doppelte Ausnutzung mit Heiz- und Kühlschirm realisiert werden. In der übrigen Konstruktion und Bezeichnungen besteht Übereinstimmung mit Fig. 29.

In Fig. 31 ist der Lagerraum 53 des zusammenklappbaren Gebäudes dargestellt. Die mittleren Trägersäulen 31 und die seitlichen Trägersäulen 31/a sind in den Boden 54 gestellt, an den mittleren 41 und seitlichen Füßen 41/a befinden sich die erwähnten Trägerprofile. An diese ist das Fangprofil 40 angeschlossen, an denen irgendeines der Abdeckelemente 3, 4, 5, 5/a, 6, 7, 8, 9, 10 in zusammengeklapptem Zustand zu sehen ist. Die Quersteife 56 des Gebäudes kann teilweise auch die Kriechpflanzen sowie außerdem die Rohrleitung für das Gießwasser tragen.

In Fig. 32 ist auf der linken Seite die zusammengeklappte Deckenkonstruktion und in der Mitte die Deckenkonstruktion während des Zusammenklappens zu sehen. Die Richtung des Zusammenklappens ist mit dem Pfeil VII bezeichnet. 53 ist der Lagerraum des zusammengeklappten Gebäudes. Die seitlichen Säulen 31/a sind in den Boden 54 gestellt. Auf der rechten Seite der Zeichnung ist eine stufenweise zusammenklappbare Abdeckung zu sehen. Pfeil VIII zeigt die Richtung des Zusammenklappens. Das stufenweise Zusammenklappen ermöglicht die Lüftung von Gebäuden dieses Typs. Bei den seitlichen Säulen 31/a können auch die seitlichen Abdeckelemente der Dachkonstruktion ähnlich zusammenklappbar ausgebildet werden. Das ist in der Zeichnung nicht dargestellt.

In Fig. 33 sind die seitlichen Füße 41/a und die mittleren Kehlen 41 dargestellt. Die Träger werden bei nebeneinander stehenden Schiffen in gegeneinander versetzter Anordnung auf den mittleren 41 und seitlichen Kehlen 41/a verteilt, weil das in Fig. 31 dargestellte Zusammenklappen « nach außen » nur bei dieser Anordnung durchgeführt werden kann. Das Gebäude ist mit lichtdurchlässiger Abdeckung als Treibhaus, mit lichtundurchlässiger Abdeckung als provisorisches Lagerhaus bzw. als Tierzuchtgebäude geeignet.

In Fig. 34 ist der Lagerraum 53 des zusammengeklappten Gebäudes zu sehen : die mittleren Säulen 31, die seitlichen Säulen 31/a, die mittlere Kehle 41, die seitlichen Füße 41/a und die Quersteifen 56 des Gebäudes dienen über ihre statischen Funktionen hinaus auch dem Tragen von Pflanzen und Gießröhren. In der Zeichnung ist das Gebäude in « nach innen » zusammengeklapptem Zustand zu sehen.

In Fig. 35 sind auf der linken Seite die Träger und die Abdeckelemente 3, 4, 4/a, 6, 7, 8 während des Zusammenklappens zu sehen, auf der rechten Seite der Zeichnung sind diese in noch offenem, gespanntem Zustand sichtbar. IX ist die Richtung des Zusammenklappens. Die Abdeckelemente bei den seitlichen Säulen 31/a können außer Betrieb vom Gerüstwerk abgenommen und zusammengefaltet gelagert werden oder sie können zweckmäßig beim Zusammenklappen « nach außen » gemäß Fig. 31. zusammen mit dem Dach zusammengeklappt werden. Diese Möglichkeit ist in der Zeichnung nicht dargestellt. Mit lichtdurchläßiger Abdeckung ist das Gebäude als Treibhaus, mit lichtundurchläßiger Abdeckung als provisorisches Lager oder Tierzuchtgebäude geeignet.

**Patentansprüche**

1. Einschiffiges oder mehrschiffiges landwirtschaftliches Mehrzweckgebäude mit energiesparender Luftkonditionierung, mit flexiblen und/oder steifen Abdeckelementen (3, 4, 4/a, 5, 5/a, 6, 7, 8, 9, 10), die über Befestigungsmittel von Trägern (1, 2) gehalten sind, welche als kanalbildende, im Querschnitt mehrfach abgewinkelte, mit Öffnungen versehene Profile zur Führung wenigstens eines gasförmigen oder flüssigen Mediums zur Konditionierung ausgebildet sind, dadurch gekennzeichnet, daß das Profil des Trägers mindestens einen nach oben offenen Kanal (57) aufweist.

2. Gebäude nach Anspruch 1, dadurch gekennzeichnet, daß die Abdeckelemente (3, 4, 4/a, 5, 5/a, 6, 8, 9, 10) formschlüssig, gegebenenfalls verschiebbar an den Trägern befestigt sind.

3. Gebäude nach Anspruch 1 oder 2, dadurch gekennzeichnet, daß die unteren Enden der Träger (1, 2) von geneigt oder vertikal angeordneten, einen Kanal für das Medium bildenden Säulen (23, 31, 31/a, 51) getragen sind.

4. Gebäude nach Anspruch 3, dadurch gekennzeichnet, daß an den oberen Enden der Säulen (23, 31, 31/a, 51) eine an den Unterkanten der Abdeckelemente angeschlossenen Kehlrinne (17, 41, 41/a, 43) angeordnet ist.

5. Gebäude nach Anspruch 2, dadurch gekennzeichnet, daß die verschiebbaren Abdeckelemente (3, 4, 4/a, 5, 5/a, 6, 8, 9, 10) dem Abstand der Träger (1, 2) entsprechend an Wickeltrommeln (64) befestigt sind, die zentral gesteuert drehantreibbar sind.

**Claims**

1. Single-aisle or multi-aisle agricultural multipurpose building with energy-saving air-conditioning, having flexible and/or rigid cover elements (3, 4, 4/a, 5, 5/a, 6, 7, 8, 9, 10) which are held, by way of fastening elements, by beams (1, 2) which are constructed in the form of duct-forming profiles that are multi-angular in cross-section and are provided with openings, for guiding at least one gaseous or liquid medium for conditioning, characterised in that the profile of the beam has at least one duct (57) that is open towards the top.

2. Building according to claim 1, characterised in that the cover elements (3, 4, 4/a, 5, 5/a, 6, 7, 8, 9, 10) are attached to the beams in a positively-locking and optionally displaceable manner.

3. Building according to claim 1 or 2, characterised in that the lower ends of the beams (1, 2) are supported by inclined or vertically arranged columns (23, 31, 31/a, 51) forming a duct for the medium.

4. Building according to claim 3, characterised in that at the upper ends of the columns (23, 31, 31/a, 51) there is arranged a valley gutter (17, 41, 41/a, 43) connected to the lower edges of the cover elements.

5. Building according to claim 2, characterised in that the displaceable cover elements (3, 4, 4/a, 5, 5/a, 6, 7, 8, 9, 10) are attached, in accordance with the spacing of the beams (1, 2), to winding drums (64) which are rotatably drivable with central control means.

**Revendications**

1. Bâtiment agricole à usages multiples à une ou plusieurs nefs et à conditionnement d'air permettant des économies d'énergie, comportant des éléments de couverture souples et/ou rigides (3, 4, 4/a, 5, 5/a, 6, 7, 8, 9, 10) qui sont supportés, à l'aide de moyens de fixation, par des poutres (1, 2) qui sont réalisées sous la forme de profils formant des canaux, coudés plusieurs fois en section transversale et munis d'ouvertures et qui sont destinés à guider au moins un fluide gazeux ou liquide servant au conditionnement, caractérisé en ce que le profil de la poutre comporte au moins un canal ouvert vers le haut (57).

2. Bâtiment selon la revendication 1, caractérisé en ce que les éléments de couverture (3, 4, 4/a, 5, 5/a, 6, 7, 8, 9, 10) sont fixés sur les poutres par complémentarité de formes, éventuellement de manière déplaçable en translation.

3. Bâtiment selon la revendication 1 ou 2, caractérisé en ce que les extrémités inférieures des poutres (1, 2) sont portées par des poteaux (23, 31, 31/a, 51) disposés de manière inclinée ou verticalement et constituant un canal pour le fluide.

4. Bâtiment selon la revendication 3, caractérisé en ce qu'il est disposé aux extrémités supérieures des poteaux (23, 31, 31/a, 51) une noue (17, 41, 41/a, 43) se raccordant aux arêtes inférieures des éléments de couverture.

5. Bâtiment selon la revendication 2, caractérisé en ce que les éléments de couverture déplaçables en translation (3, 4, 4/a, 5, 5/a, 6, 8, 9, 10) sont fixés, en correspondance à l'écartement des poteaux (1, 2), sur des rouleaux d'enroulement (64) qui peuvent être entraînés en rotation par une commande centrale.

Fig. 1

Fig. 2

Fig. 3

Fig. 4

Fig. 5

Fig. 6

Fig. 7

Fig. 8

Fig. 9

Fig. 10

Fig.11

Fig.12

Fig.14

Fig.13a

Fig.13

Fig. 15

Fig. 16

Fig. 18

Fig. 17

4

Fig.20

Fig. 19

Fig. 21

**Fig.22**

**Fig.23**

**Fig.24**

Fig. 25

Fig. 26

Fig. 27

Fig. 28

Fig. 29

Fig. 30

7

Fig. 31

Fig. 32

Fig. 33

Fig. 34

Fig. 35